## Europäisches Patentamt

## European Patent Office

## Office européen des brevets

(19)

(11) Veröffentlichungsnummer: **0 011 752 B1**

(12) **EUROPÄISCHE PATENTSCHRIFT**

(45) Veröffentlichungstag der Patentschrift:
15.02.84

(21) Anmeldenummer: 79104410.0

(22) Anmeldetag: 09.11.79

(51) Int. Cl.³: **C 09 D 17/00,** C 08 K 9/04,
C 08 J 3/08, C 08 J 9/00,
C 08 L 71/02

(54) Verfahren zur Herstellung von stabilen Füllstoff-Polyol-Dispersionen.

(30) Priorität: 22.11.78 DE 2850609

(43) Veröffentlichungstag der Anmeldung:
11.06.80 Patentblatt 80/12

(45) Bekanntmachung des Hinweises auf die Patenterteilung:
15.02.84 Patentblatt 84/7

(84) Benannte Vertragsstaaten:
BE DE FR GB IT NL SE

(56) Entgegenhaltungen:
FR - A - 2 195 649
US - A - 2 316 535
US - A - 4 108 791

Die Akte enthält technische Angaben, die nach dem Eingang der Anmeldung eingereicht wurden und die nicht in dieser Patentschrift enthalten sind.

(73) Patentinhaber: BASF Aktiengesellschaft,
Carl-Bosch-Strasse 38, D-6700 Ludwigshafen (DE)

(72) Erfinder: Marx, Matthias, Dr. Dipl.-Chem., Seebacher Strasse 49, D-6702 Bad Duerkheim 1 (DE)
Erfinder: Nissen, Dietmar, Dr. Dipl.-Chem.,
Ziegelhaeuser Landstrasse 31, D-6900 Heidelberg (DE)

Verfahren zur Herstellung von stabilen Füllstoff-Polyol-Dispersionen

Die Erfindung betrifft ein Verfahren zur Herstellung von stabilen Füllstoff-Polyol-Dispersionen, wobei Füllstoffe, vorzugsweise anorganische Füllstoffe in Gegenwart von Polyolen mit hohen örtlichen Energiedichten in situ auf eine Teilchengrösse kleiner als 7 μm zerkleinert werden.

Die Herstellung von Dispersionen aus organischen Polymeren und hydroxylgruppenhaltigen Polyäthern ist bekannt. Hierbei werden üblicherweise wässerige Polymerdispersionen mit Polyätherolen gemischt und anschliessend das Wasser abgetrennt. Es wurde ferner vorgeschlagen, Pfropfpolymere durch in situ Polymerisation von äthylenisch ungesättigten Monomeren in gegebenenfalls äthylenisch ungesättigten Polyätherolen herzustellen und die erhaltenen Produkte zur Herstellung von Polyurethanen zu verwenden.

Sofern zur Herstellung von Polyurethanen anorganische Füllstoffe mitverwendet werden, werden diese den Polyolen üblicherweise unmittelbar vor der Verarbeitung einverleibt. Es wurde auch versucht, anorganische Materialien in Polyätherolen zu dispergieren. Derartige Dispersionen besitzen in den meisten Fällen sehr hohe Viskositäten, die die Verarbeitung erheblich erschweren oder unmöglich machen. Nachteilig ist ferner, dass die anorganischen Füllstoffe aufgrund ihres höheren spezifischen Gewichts schneller sedimentieren als organische Polymere. Dispersionen aus anorganischen Füllstoffen und Polyolen haben daher in der industriellen Praxis bisher keine Verwertung gefunden.

Aufgabe der vorliegenden Erfindung war es, lagerstabile, nicht zum Sedimentieren neigende Dispersionen von Füllstoffen in Polyolen herzustellen, die bei einem Feststoffgehalt von 10 Gew.-%, bezogen auf das Gesamtgewicht, eine Viskosität kleiner als 2500 m Pa.s bei 25 Grad C und bei Feststoffgehalten von 20 Gew.-% Viskositäten kleiner als 5000 m Pa.s bei 25 Grad C aufweisen.

Es wurde gefunden, dass man lagerstabile Dispersionen mit den gewünschten Eigenschaften erhält, wenn man die Füllstoffe in situ in den Polyolen zerkleinert.

Gegenstand der vorliegenden Erfindung ist somit ein Verfahren zur Herstellung von stabilen Füllstoff-Polyol-Dispersionen, das dadurch gekennzeichnet ist, dass man Füllstoffe in Gegenwart von Polyolen mit einer Funktionalität von 2 bis 8 und einem Molekulargewicht von 200 bis 8000 in situ mit örtlichen Energiedichten von 36 bis 10 800 $MJ/m^3$ auf eine Teilchengrösse kleiner als 7 μm zerkleinert und hierbei gleichzeitig dispergiert.

Mit dem erfindungsgemässen Verfahren werden vorzugsweise Füllstoff-Polyol-Dispersionen mit einem Gehalt an organischen und vorzugsweise anorganischen Füllstoffen von 3 bis 50 Gew.-%, vorzugsweise 5 bis 25 Gew.-%, bezogen auf das Gesamtgewicht hergestellt, bei denen die Teilchengrösse des anorganischen Füllstoff 0,01 bis

7 μm, vorzugsweise 0,05 bis 1,5 μm ist. Die Dispersionen besitzen mit einem Feststoffgehalt von 10 Gew.-% bei 25°C Viskositäten von weniger als 2500 m Pa.s, vorzugsweise von 1000 bis 1500 m Pa.s und mit einem Feststoffgehalt von 20 Gew.-% bei 25°C Viskositäten von kleiner als 5000 m Pa.s, vorzugsweise von 1500 bis 4000 m Pa.s und sind daher auf üblichen Verarbeitungsmaschinen zur Polyurethanherstellung sehr gut verarbeitbar.

Vorteilhaft ist ferner, dass die erfindungsgemäss hergestellten Füllstoff-Polyol-Dispersionen eine ausserordentlich gute Lagerstabilität besitzen. So wurden nach Lagerzeiten von mehr als 6 Monaten noch keinerlei Ablagerungen von Feststoffen festgestellt.

Zu den zur Herstellung der Füllstoff-Polyol-Dispersionen verwendbaren Ausgangskomponenten ist folgendes auszuführen.

Geeignete, als Dispergiermedium verwendbare Polyole besitzen Funktionalitäten von 2 bis 8, vorzugsweise 2 bis 4 und Molekulargewichte von 200 bis 8000, vorzugsweise 800 bis 6000 und insbesondere 1800 bis 3000. Bewährt und daher vorzugsweise verwendet werden Polyesterole und insbesondere Polyätherole. In Betracht kommen jedoch auch andere hydroxylgruppenhaltige Polymere mit den genannten Molekulargewichten, beispielsweise Polyesteramide, Polyoxymethylene und Polycarbonate, insbesonders solche, hergestellt aus Diphenylcarbonat und Hexandiol-1,6 durch Umesterung.

Die Polyesterole können beispielsweise aus Dicarbonsäuren, vorzugsweise aliphatischen Dicarbonsäuren, mit 2 bis 12, vorzugsweise 4 bis 8 Kohlenstoffatomen im Alkylenrest und mehrwertigen Alkoholen, vorzugsweise Diolen, hergestellt werden. Genannt seien beispielhaft aliphatische Dicarbonsäuren, wie Glutarsäure, Pimelinsäure, Korksäure, Azelainsäure, Sebacinsäure, Undecandisäure, Dodecandisäure und vorzugsweise Bernstein- und Adipinsäure und aromatische Dicarbonsäuren, wie Phthalsäure und Terephthalsäure. Beispiele für zwei- und mehrwertige, insbesondere zweiwertige Alkohole sind:

Äthylenglykol, Diäthylenglykol, 1,2- bzw. 1,3-Propylenglykol, Dipropylenglykol, Decandiol-1,10, Glycerin, Trimethylolpropan und vorzugsweise Butandiol-1,4 und Hexandiol-1,6. Die Polyesterole besitzen Molekulargewichte von 800 bis 3500, vorzugsweise von 1500 bis 2800 und Hydroxylzahlen von 35 bis 180, vorzugsweise von 40 bis 110.

Vorzugsweise als Polyole verwendet werden jedoch Polyätherole, die nach bekannten Verfahren aus einem oder mehreren Alkylenoxiden mit 2 bis 4 Kohlenstoffatomen im Alkylenrest und einem Startermolekül, das 2 bis 8, vorzugsweise 2 bis 4 aktive Wasserstoffatome enthält, hergestellt werden. Geeignete Alkylenoxide sind beispielsweise Tetrahydrofuran, 1,3-Propylenoxid, 1,2- bzw. 2,3-Butylenoxid, Styroloxid und vorzugsweise Äthylenoxid und 1,2-Propylenoxid. Die Alkylenoxide können einzeln, alternierend nacheinander oder als Mischungen verwendet werden. Als Startermoleküle kommen beispielsweise in Betracht: Wasser, Dicarbonsäure, wie Bernsteinsäure, Adipinsäure, Phthalsäure und Terephthalsäure, gegebenenfalls N-mono-, N,N- und N,N'-dialkylsubstituierte Diamine mit 1 bis 4 Kohlenstoffatomen im Alkylrest, wie gegebenenfalls mono- und dialkylsubstituiertes Äthylendiamin, 1,2- bzw. 1,3-Propylendiamin, 1,4-Butylendiamin, 1,6-Hexamethylendiamin und 4,4'-, 2,4'- und 2,2'-Diaminodiphenylmethan, Alkanolamine, wie Äthanolamin, Diäthanolamin, N-Methyl- und N-Äthyl-diäthanolamin und Triäthanolamin, Hydrazin und vorzugsweise mehrwertige, insbesondere zwei- und dreiwertige Alkohole wie Äthylenglykol, Propylenglykol-1,2 und -1,3 Diäthylenglykol, Dipropylenglykol, Butylenglykol-1,4, Hexamethylenglykol-1,6, Glycerin, Trimethylolpropan, Pentaerythrit, Sorbit und Saccharose.

Bevorzugt verwendet werden im wesentlichen di- und/oder insbesondere trifunktionelle Polyätherole mt Molekulargewichten von 200 bis 8000, vorzugsweise von 800 bis 6000 und Hydroxylzahlen von 15 bis 800, vorzugsweise von 25 bis 200, die sowohl Äthylenoxid- als auch 1,2-Propylenoxideinheiten in der Oxyalkylenkette enthalten, wobei diese entweder statistisch oder blockweise in der Oxyalkylenkette angeordnet sein können. Zweckmässigerweise eingesetzt werden Polyätherole, die vorzugsweise primäre Hydroxylgruppen besitzen und insbesonders trifunktionelle Polyätherole mit Hydroxylzahlen von 20 bis 40.

Als organische und vorzugsweise anorganische Füllstoffe im Sinne der Erfindung sind die an sich bekannten üblichen organischen und anorganischen Füllstoffe, Verstärkungsmittel, Beschwerungsmittel, Mittel zur Verbesserung des Abriebverhaltens in Anstrichfarben, Beschichtungsmitteln usw. zu verstehen. Im einzelnen seien beispielhaft genannt: anorganische Füllstoffe wie silikatische Mineralien, beispielsweise Schichtsilikate wie Antigorit, Serpentin, Hornblenden, Amphibole, Chrisotil, Talkum; Metalloxide, wie Kaolin, Aluminiumoxide, Titanoxide und Eisenoxide, Metallsalze wie Kreide, Schwerspat und anorganische Pigmente, wie Cadmiumsulfid, Zinksulfid sowie Glas, Asbestmehl u. a. Vorzugsweise verwendet werden Kaolin (China Clay), Aluminumsilikat und Copräzipitate aus Bariumsulfat und Aluminiumsilikat. Als organische Füllstoffe kommen beispielsweise in Betracht: Kohle, Kollophonium und Cyclopentadienylharze. Die organischen und anorganischen Füllstoffe können einzeln oder als Gemische verwendet werden.

Zur Herstellung der erfindungsgemässen Füllstoff-Polyol-Dispersionen können ferner gegebenenfalls Dispergierhilfsmittel in Mengen von 0,1 bis 10 Gew.-%, vorzugsweise von 0,5 bis 5 Gew.-%, bezogen auf das Gewicht des Füllstoffs mitverwendet werden. Beispielhaft genannt seien Dispergierhilfsmittel, wie Ölsäureamide, Ester höherer Fettsäuren, wie die Mono-, Di- und Triglyceride der Ölsäure, oxäthylierte Fettsäuren u. a.

Wie bereits dargelegt wurde, ist zur Herstellung von stabilen Dispersionen erfindungswesentlich, dass die Füllstoffe in situ in den Polyolen mit Hilfe von örtlichen Energiedichten auf Teilchengrössen kleiner als 7 μm, insbesonders von 0,01 bis 5 μm, vorzugsweise 0,05 bis 1,5 μm zerkleinert werden. Von 36 bis 10 800 MJ/m³, vorzugsweise von 72 bis 9000 MJ/m³.

Die Füllstoff-Polyol-Dispersionen werden im einzelnen auf folgende Weise hergestellt:

Die Füllstoffe und/oder Pigmente werden zunächst auf Teilchengrössen kleiner als 100 μm zerkleinert. Hierzu können grobkörnige Materialien beispielsweise auf mechanischen Mühlen, wie Pralltellermühlen, Stiftmühlen u. a. gemahlen werden. Es ist jedoch auch möglich mit Hilfe von physikalischen Methoden, beispielsweise durch Umfällen, Teilchengrössen kleiner als 100 μm zu erhalten.

Die so vorbehandelten Füllstoffe und/oder Pigmente werden nun in Gegenwart von Polyolen und gegebenenfalls Dispergierhilfsmittel in situ auf Teilchengrössen kleiner als 7 μm zerkleinert (Nasszerkleinerung).

Die Nasszerkleinerung kann beispielsweise in mechanischen Dispergiervorrichtungen, vorzugsweise in Dispergiermaschinen hohen örtlicher Energiedichte mit Mahlkörpern, wie z. B. Rührwerkskugelmühlen, Sandmühlen, Netsch-Mühlen, Perl-Mühlen, Dyno-Mühlen, Planetenkugelmühlen, Kesselmühlen und Attritoren durchgeführt werden. Als Mahlkörper kommen vorzugsweise kugelförmige Mahlkörper in Betracht, die beispielsweise aus Glas, Keramik, Metall oder hartem abriebfestem Kunststoff, z. B. Polyamid, sein können und deren Durchmesser zwischen 0,2 bis 8, vorzugsweise 0,4 bis 5 mm beträgt.

Zum Nasszerkleinern wird der Füllstoff mit dem Polyol in solchen Mengen gemischt, dass die resultierende Dispersion einen Füllstoffgehalt von 3 bis 50 Gew.-%, vorzugsweise von 5 bis 25 Gew.-%, bezogen auf das Gesamtgewicht besitzt. Hierbei kann die Gesamtmenge an Füllstoff mit der Gesamtmenge Polyol sowie gegebenenfalls Dispergierhilfsmittel gemischt, zerkleinert und gleichzeitig dispergiert werden. Es ist jedoch auch möglich, die gesamten Polyolmengen mit einem bestimmten Teil des Füllstoffs zu mischen und dieses Gemisch auf eine bestimmte Teilchengrösse des Füllstoffs zu zerkleinern und danach der Mischung die restliche Füllstoffmenge einzuverleiben oder vorzugsweise eine Teilmenge Polyol mit der Gesamtmenge an Füllstoff in Gegenwart von Dispergierhilfsmittel zu vermahlen und im Lauf des Mahlvorgangs weiteres Polyol und gegebenenfalls Dispergierhilfsmittel hinzuzufügen.

Die erfindungsgemäss hergestellten Füllstoff-Polyol-Dispersionen können ferner vor der Verarbeitung mit zusätzlichem Polyol gemischt und auf die erforderlichen Feststoffgehalte eingestellt werden. Zur Erzielung bestimmter physikalischer Eigenschaften in den Endprodukten kann es zweckmässig sein, verschiedene Füllstoff-Polyol-Dispersionen zu mischen.

Die Produkte werden vorzugsweise zur Herstellung von Polyurethanen, insbesondere Polyurethanschaumstoffen, verwendet.

Die in den Beispielen genannten Teile beziehen sich auf das Gewicht.

Beispiel 1

500 Teile eines durch gemeinsame Fällung aus Bariumsulfat und Kieselsäure hergestellten Produktes (Glühverlust 6 Gew.%, $SiO_2$-Gehalt 73% und $BaSO_4$-Gehalt 21%, pH-Wert nach DIN 53 200 = 7,0) mit einer mittleren Teilchengrösse von 70 μm werden in 2000 Teile eines Polyätherol, hergestellt aus Glycerin als Starter, Propylenoxid und Äthylenoxid mit einem Molekulargewicht von 4900 und einer Hydroxylzahl von 35 eingerührt und 4 Stunden in einer Kugelmühle, deren Innenwand gummiert war, und wobei als Kugeln Glaskugeln verwendet wurden, zerkleinert. Die Drehzahl der Kugelmühle wurde so gewählt, dass die örtliche Energiedichte ungefähr 7200 bis 9000 MJ/$m^3$ betrug und während der Dispergierzeit in der Dispersion eine Temperatur von 35 Grad C nicht überschritten wurde. Danach wurde die Dispersion aus der Mühle entnommen und eine Sedimentationsanalyse durchgeführt. Hierbei ergab sich, dass 95% der in der Dispersion enthaltenen Teilchen kleiner als 1 μm und 50% der Teilchen kleiner als 0,5 μm waren. Die lagerstabile Dispersion zeigte nach mehr als 3 Monaten noch keinerlei Sedimentation.

Beispiel 2

480 Teile eines Kaolins mit einem pH-Wert von 5,5 und einem spezifischen Gewicht von 3,6 g/$cm^3$, bei dem 99,5 Gew.-% der Teilchen kleiner als 10 μm und 80 Gew.-% der Teilchen kleiner als 2 μm waren, wurden in 1800 Teilen eines Polyätherols, hergestellt aus Trimethylolpropan als Starter, Propylenoxid und Äthylenoxid mit einem Molekulargewicht von 5000 und einer Hydroxylzahl von 32 aufgeschlämmt und anschliessend in 5 Passagen durch eine kontinuierliche Rührwerkskugelmühle durchgeleitet. Die Gesamtdauer des Mahlvorganges betrug 3 Stunden, die örtliche Energiedichte war ungefähr 7200 bis 9000 MJ/$m^3$. Eine Sedimentationsanalyse der erhaltenen Dispersion ergab, dass weniger als 1 Gew.-% der Teilchen grösser als 3 μm waren, ungefähr 80 Gew.-% der Teilchen waren ungefähr 1 μm, 20 Gew.-% der Teilchen kleiner als 0,5 μm. Die Dispersion zeigte nach 4 Monaten noch keine Sedimentation.

Beispiel 3

200 Teile eines handelsüblichen Talkummehls mit einem Gehalt an $SiO_2$:62,6 Gew.-%, MgO:31,4 Gew.-%, $Al_2O_3$: 0,20 Gew.-%, $Fe_2O_3$ 0, 10 Gew.-%, Wasser 4,8 Gew.-%, einer Dichte von 2,77 g/$cm^3$ und einer Korngrösse von 99% kleiner 10 μm und 85% kleiner 5 μm wurden in 800 Teilen eines Polyätherols auf Basis Trimethylolpropan, Propylenoxid und Äthylenoxid mit einem Molekulargewicht von 4900 und einer Hydroxylzahl von 35 gemischt und danach bei 40 Grad C in einer kontinuierlichen Rührwerkskugelmühle mit einer Glaskugelfüllung (Kugeldurchmesser 3 mm) in 5 Passagen zerkleinert. Die Gesamtdauer des Mahlvorgangs betrug 4 Stunden, die örtliche Energiedichte lag bei ungefähr 2160 MJ/$m^3$. Eine Sedimentationsanalyse der erhaltenen Dispersion ergab, dass 99 Gew.-% der Teilchen kleiner als 4 μm waren.

Beispiele 4 bis 9 und Vergleichsbeispiele A bis E

Anorganische Füllstoffe werden mit einem Polyätherol auf Basis Trimethylolpropan als Startermolekül, Propylenoxid und Äthylenoxid mit einem Molekulargewicht von 4900 und einer Hydroxylzahl von 35 gemischt und mit einer Rührwerksmühle vom Typ Perl-Mill (Hersteller: Firma Drais) mit einer örtlichen Energiedichte von 2160 MJ/$m^3$ zerkleinert.

Bei den Vergleichsbeispielen wird der Füllstoff mit Hilfe eines Rührscheibenmischers (Drehzahl 1500 U/min) eingerührt und anschliessend 30 Minuten nachgerührt.

Die verwendeten Füllstoffe, Konzentrationen im Polyätherol, bezogen auf das Gesamtgewicht, die Mahldauer und Viskositäten sind in der folgenden Tabelle zusammengefasst.

| Beispiel Vergl.-Beispiel | Füllstoff | Füllstoffkonzentration im Polyätherol Gew.-% | Mahldauer Std. | Viskosität bei 25° C m.Pa.S | Sediment nach 21 Tagen |
|---|---|---|---|---|---|
| 4 | ® Transpafill (Hersteller: Degussa) | 10 | 3 | 1300 | kein Sediment |
| A | ® Transpafill (Hersteller: Degussa) | 10 | – | 1500 | fester Bodensatz |
| 5 | ® Transpafill (Hersteller: Degussa) | 15 | 16 | 2500 | kein Sediment |
| B | ® Transpafill (Hersteller: Degussa) | 15 | – | 2250 | fester Bodensatz |
| 6 | Aluminiumsilikat P820 (Hersteller Degussa) | 10 | 3 | 1240 | geringer Bodensatz leicht aufrührbar |
| 7 | Aluminiumsilikat P820 (Hersteller Degussa) | 10 | 48 | 1500 | kein Sediment |
| C | Aluminiumsilikat P820 (Hersteller Degussa) | 10 | – | 1400 | Bodensatz kompakt |
| 8 | China Clay (English China clay group) | 20 | 6 | 4000 | geringer Bodensatz |

| Beispiel Vergl.-Beispiel | Füllstoff | Füllstoffkonzentration im Polyätherol Gew.-% | Mahldauer Std. | Viskosität bei 25° C m.Pa.S | Sediment nach 21 Tagen |
|---|---|---|---|---|---|
| D | China Clay (English China clay group) | 20 | — | 2250 | Bodensatz |
| 9 | Talkum IT extra (Norwegian Talc) | 20 | 6 | 3800 | wenig lockeres Sediment |
| E | Talkum IT extra (Norwegian Talc) | 20 | — | 4500 | fester Bodensatz |

Tabelle

Beispiel 10

250 Teile eines Copräzipitates aus Bariumsulfat und Kieselsäure (BaSO$_4$-Gehalt 21% und SiO$_2$-Gehalt 73%) mit einer mittleren Teilchengrösse von 70 μm werden in 1000 Teile eines Polyesterpolyols, hergestellt durch Polykondensation von Adipinsäure und einer Diolmischung aus Butandiol-1,4, Pentandiol-1,5 und Hexandiol-1,6, mit einer OH-Zahl von 56 und einer Viskosität von 650 m.Pa.s, gemessen bei 75 Grad C gemischt.

Durch einstündiges intensives Mischen und Mahlen mit einem Dissolver wird eine milchige Dispersion erhalten, die nach 6monatiger Lagerung keine Sedimentbildung zeigte. Die Teilchengrösse der Dispersion beträgt maximal 7 μm; 93% der Teilchen sind kleiner als 5 μm und 78% der Teilchen kleiner als 3 μm.

Beispiele 11 bis 12

Verfährt man analog den Angaben von Beispiel 3, verwendet jedoch anstelle eines handelsüblichen Talkummehls Kohlestaub oder ein Dicyclopentadienylharz, so erhält man ebenfalls lagerstabile Dispersionen bei den 99% der Partikel kleiner als 4 μm sind.

**Patentansprüche**

1. Verfahren zur Herstellung von stabilen Füllstoff-Polyol-Dispersionen, dadurch gekennzeichnet, dass man Füllstoffe in Gegenwart von Polyolen mit einer Funktionalität von 2 bis 8 und einem Molekulargewicht von 200 bis 8000 in situ mit örtlichen Energiedichten von 36 bis 10 800 MJ/m$^3$ auf eine Teilchengrösse kleiner als 7 μm zerkleinert und hierbei gleichzeitig dispergiert.

2. Verfahren gemäss Anspruch 1, dadurch gekennzeichnet, dass man als Polyole di- und/oder trifunktionelle Polyätherole mit Molekulargewichten von 800 bis 6000 verwendet.

3. Verfahren nach Anspruch 1, dadurch gekennzeichnet, dass man als Füllstoff anorganische Füllstoffe verwendet.

**Claims**

1. A process for the manufacture of stable filler-polyol dispersions, wherein fillers are comminuted, in the presence of polyols having a functionality of from 2 to 8 and a molecular weight of from 200 to 8000, in situ with localized energy densities of from 36 to 10,800 MJ/m$^3$ to particle sizes of less than 7 μm, the fillers being simultaneously dispersed.

2. A process as claimed in claim 1, wherein di- and/or trifunctional polyetherols having a molecular weight of from 800 to 6000 are used as polyols.

3. A process as claimed in claim 1, wherein inorganic fillers are used as filler materials.

**Revendications**

1. Procédé de préparation de dispersions stables de matières de charge dans des polyols, caractérisé en ce que l'on soumet des matières de charge in situ, en présence de polyols d'une fonctionnalité de 2 à 8 et avec des poids moléculaires de 200 à 8000, avec des densités d'énergie locales de 36 à 10 800 MJ/m$^3$, à une réduction à une granulométrie inférieure à 7 μm avec dispersion concomitante des particules.

2. Procédé suivant la revendication 1, caractérisé en ce que les polyols sont choisis parmi les poly-éther-ols di- et(ou) tri-fonctionnels avec des poids moléculaires de 800 à 6000.

3. Procédé suivant la revendication 1, caractérisé en ce que les matières de charge sont des matiéres de charge minérales.